# EUROPÄISCHE PATENTSCHRIFT

(11) **EP 0 797 514 B1**
(45) Veröffentlichungstag und Bekanntmachung des Hinweises auf die Patenterteilung: **10.04.2002**
(21) Anmeldenummer: 96938018.7
(22) Anmeldetag: 16.10.1996
(51) Int. Cl.: B60J 10/02

(54) **CONVENTIONAL-DIRECT-GLAZING**
CONVENTIONAL DIRECT GLAZING
PROCEDE CLASSIQUE DE VITRAGE DIRECT

(30) Priorität: 19.10.1995 DE 19538939
(43) Veröffentlichungstag der Anmeldung: 01.10.1997
(73) Patentinhaber: SAAR-GUMMIWERK GmbH, 66687 Wadern (DE)
(72) Erfinder: KIENTZ, Paul, D-66687 Wadern (DE); SCHÄFER, Andreas, D-66687 Wadern (DE)
(74) Vertreter: Schulte, Jörg, Dipl.-Ing.
(86) Internationale Anmeldenummer: DE9601959
(87) Internationale Veröffentlichungsnummer: WO9714571

(56) Entgegenhaltungen:
- EP-A- 0 402 254
- EP-A- 0 521 825
- FR-A- 2 716 416
- US-A- 3 574 024
- US-A- 4 635 420

## Beschreibung

Die Erfindung betrifft ein Verfahren zum dauerhaft festen und dichten Verbinden eines gummi-elastischen Konstruktionselementes, in Form eines strangförmigen Verankerungs- und/oder Dichtungsprofil, mit einer feststehenden, transparenten bis durchscheinenden Fensterscheibe zu einem Scheibenmodul aus anorganischem oder organischem Glas oder aus einem Verbundglassystem sowie nach dem Verfahren gefügte Scheibenmoduli.

Die Verfahren der Einglasungstechnik zur Einglasung feststehender Scheiben, insbesondere dem Glazing von Fahrzeugscheiben, befinden sich derzeit auf einem Stand, dass die meisten feststehenden Fahrzeugscheiben direkt mit der Karosserie auf einem dazu vorgesehenen Flansch der Fensteröffnung im Fahrzeug verklebt, d. h. stoffschlüssig verbunden werden, siehe z. B. US-A-3,574,024.

Diese Technologie, bei der die Scheibe am Montageband gereinigt, vorbehandelt und mit Montagekleber ind ie Fensteröffnung des Fahrzeuges eingeklebt wird, wird als Direkteinglasung oder auch **Direct-Glazing** bezeichnet, weil die Scheibe direkt auf den Flansch der Karosserieöffnung geklebt wird.

Folgende Vorteile sind bei diesem Verfahren hervorzuheben:
- schnelle und rationelle Montage, auch bei einem Einsatz von Montagerobotern;
- bei sachgerechtem Arbeiten treten keine Dichtigkeitsprobleme mehr auf;
- Erhöhung der Karosseriesteifigkeit;
- stilistischer Freiheitsgrad sehr hoch, da die Scheibenkontur frei gewählt werden kann;
- karosseriebündige Einglasung möglich, Flash-Glazing;
- Sicherheit gegen Einbruch;
- gute Geräuschdämmung;
- im Falle eines Unfalles löst sich die Scheibe nicht von der Karosserie.

Dem stehen aber auch erhebliche Nachteile gegenüber, welche sich insbesondere bei einem erforderlich werdenden Scheibenausbau auswirken.

Im Falle einer - noch beim Fahrzeughersteller - notwendig werdenden Nachlakkierung des Fahrzeuges, was etwa für 20 % der hergestellten Fahrzeuge zutrifft, müssen die Scheiben entweder abgeklebt oder ausgebaut werden.

Bei Unfallsächen, die einen Scheibenausbau erfordern, wird die Scheibe mit einem Messer oder Draht aus dem Flansch geschnitten, siehe z.B. US-A-3,574,024, Spalte 5, Zeilen 71-74 oder FR-A-2,716,416, Figur 6. Dazu muss zuvor in vielen Fällen die Innenverkleidung des Fahrzeugs ausgebaut werden, um Zugang zur Innenseite der Verklebung zu erhalten. Kommt es beim Austrennen zu Beschädigungen des Flansches, muss dieser aufwendig repariert werden; weitrhin ist sogar die Gefahr gegeben, dass das mit der Scheibe verbundene Dichtungsprofil beschädigt wird, was die Verwendung eines neuen Scheibenmoduls zur Folge hat.

Im folgenden sind die Nachteile der Direkteinglasung stichwortartig zusammengefasst:
- teueres Verfahren;
- hoher Investitionsaufwand;
- Demontage der Scheibe sehr aufwendig, dadurch sehr teuer;
- bei Scheibenschäden hoher Reparaturaufwand und deshalb eine relativ hohe Versicherungseinstufung,
- durch eine teuere Demontage werden die Kosten einer ggf. erforderlichen Nachlackierung sehr hoch;
- bei der Scheibenmontage ist ein Abstützen der Scheibe bis zum ersten Abbinden des Klebers notwendig;
- Ausbau der Scheiben beim Recycling sehr aufwendig.

In der US-A-3,574,024 wird ein Verfahren und Mittel charakterisiert mit denen die montagegerechte Herstellung einer Verbindung zwischen Fensterscheibe und Karosserieöffnung am Fahrzeug verbessert wird. Als Mittel dient dabei ein röhrenförmiger Verbindungsstreifen (Strip), umfassend ein aushärtungsfähiges Polymermaterial, das einen in Längsrichtung im Strip verlaufenden elektrischen Heizwiderstandsdraht aufweist, der dazu vorgesehen ist, das zunächst noch unvernetzte, plastische Polymermaterial in einen definierten Vernetzungszustand zu überführen, d. h. völlig oder teilweise auszuhärten, um dadurch dem Polymermaterial die erforderliche elastische Spannkraft zu verleihen, die zur Befestigung in der Karosserieöffnung erforderlich ist. Die Verfahrensschritte umfassen dabei zunächst ein Positionieren der Fensterscheibe in der Öffnung des Fahrzeugkörpers, wozu der - da zunächst noch unvernetzt - anfangs klebrige, plastisch verformbare und Verrückungen zulassende Verbindungsstreifen aus Polymermaterial dient. Anschließend wird bei eingenommener Position durch den im Strip eingelegten Heizwiderstandsdraht das Polymermaterial erwärmt und ausgehärtet, wobei der Heizwiderstandsdraht umhüllt ist von einer Glasfaserröhre und beide wiederum umhüllt sind von einer relativ dickwandigen Plastikröhre.

Begleitende Verfahrensschritte sind dabei unabdingbar, dass, wenn die peripheren Oberflächenabschnitte von Fensterscheibe und metallischem Bereich der Karosserieöffnung am Fahrzeug - dem Flansch - auf der vorgesehenen Kontaktfläche gesäubert ist, vorab eine Schicht von verdünnter Primer-Lösung A auf die Scheibe als Haftungsgrundlage und eine weitere Schicht Primer-Lösung B auf den Flansch aufgetragen wird, wobei beide Aufträge als Haftmittelschichten die Haftungsgrundlage für die spätere, unlösbare Verbindung bilden. Derartige Verfahren eines verbesserten Direct-Glazing sind auch heute noch Stand der Technik, überwiegend jedoch getätigt mittels Polyurethan-Kleber.

Eine so geschaffene unlösbare Verbindung zwischen Dichtung und Karosserie nach der US-Schrift beseitigt jedoch fast keinen der aufgeführten Nachteile und ist eher Ursache weiterer Nachteile, insbesondere bei Bezugnahme auf die Rezepturen der beiden Primer-Lösungen als Haftungsgrundlagen.

Die US-A-4,635,420 zeigt ein Verfahren, bei dem das Scheibenmodul für den Einbau in einem Fahrzeug mit einem rundum laufenden Dichtungselement versehen wird, das einen Teilbereich aus einem schweißbaren Material aufweist, um so dieses Dichtungselement mit der Scheibe zu verbinden. Dieser Teilbereich, d. h. der die beiden senkrechten Teile des Dichtungselement miteinander verbindende Steg ist aufgrund der vorgesehenen Übertragung der notwendigen Schweißenergie nur für thermoplastische Scheiben anwendbar und zwingt den Anwender dazu, dieses Dichtungsprofil der Scheibenkante zuzuordnen.

Die technologische Vorstufe der Direkteinglasung war die konventionelle Einglasungstechnik, das **Conventional-Glazing.** Dabei wurde die in die Karosserie einzubauende Scheibe zunächst mit einem Dichtungsprofil umrahmt und bildete somit einen Scheibenmodul, d. h. ein Konstruktionsmodul das als Einheit eingebaut wurde. Dieses Scheibenmodul wurde anschließend mittels einer bei der Vormontage in den Blechkanal der Karosse eingelegten Montageschnur in die Karosserieöffnung eingezogen.

Folgende Vorteile des Conventional-Glazing sind stichpunktartig hervorzuheben:
- kostengünstigeres System gegenüber dem Direct-Glazing;
- kein Investitionsaufwand am Montageband;
- keine Schwarzfärbung der Scheibe oder von Scheibenbereichen notwendig;
- Ausbau und Wiedereinbau der Scheibe erfolgt problemlos, womit dann geringere Reparaturkosten und eine niedrigere Versicherungseinstufung einhergehen.

Die Nachteile, die letztlich die Hinwendung der Fahrzeughersteller zum Verfahren des Direct-Glazing veranlassten waren:
- mögliche Undichtigkeiten zwischen Glas und Dichtung als auch Dichtung und Karosse;
- stilistisch geringe Möglichkeiten - kein Flash-Glazing möglich;
- eckige Scheiben nur mit Formstücken in de Dichtung zu bewerkstelligen;
- Fixierung der Scheibe immer nur an der Scheibenkante möglich;
- Vormontage des Scheibenmoduls (Dichtung/Scheibe) beim Fahrzeughersteller erforderlich.

Aufgabe der Erfindung ist es daher, ein Verfahren der Einglasungstechnik zu entwickeln, welches inbesondere die Nachteile des Direct-Glazings nicht mehr aufweist, ohne jedoch die Vielzahl seiner genannten Vorteile aufzugeben.

Des weiteren sollen auch zeitgemäße Aspekte, wie z. B. der Einsatz wiederverwertbarer Stoffe (Recycling) berücksichtigt werden.

Die Aufgabe wird erfindungsgemäß durch ein Verfahren gemäß Anspruch 1 gelöst.

Dabei ist es gleichgültig, ob die Scheibengeometrie bzw. die Geometrie des Auflagenbereiches eben oder gekrümmt ist, ob der Auflagebreich den Scheibenrand teilweise, völlig oder gar nicht mit einbezieht, all dies ist gleichgültig, denn dies stellt lediglich veränderte Anforderungen an die mit dem Schweißband in Kontakt zu bringenden Fügeteile sowie die Art des Wärmeeinbringens zur thermischen Aktivierung des Schweißbandes.

Auch ist es unwesentlich nach welchem physikalischen Wirkprinzip (Hochfrequenz, Ultraschall, Heißluft, Heizplatten...) die Aktivierungswärme für das Schweißband eingebracht wird. Es ist jedoch besonders wirtschaftlich und sinnvoll, und verbilligt den Fertigungsprozess erheblich, wenn die Wärme zur thermischen Aktivierung des Schweißbandes aus der der Scheibe während ihrer Herstellung verbliebenen Restwärme aufgebracht wird.

Als gattungsgemäße Werkstoffe für die gummi-elastischen Konstruktionselemente, wie beispielsweise strangförmige Verankerungs- und/oder Dichtungsprofile, können dabei alle Elastomere aus Naturkautschuk (NR) oder Ethylen-Propylen-Terpolymer (EPDM) oder Thermoplastischem Elastomer (TPE) oder einem vergleichbar gummi-elastischen Werkstoff angesehen werden.

Das Scheibenmodul kann nach dem erfindungsgemäßen Verfahren, **ohne** dass das Dichtungsprofil auf die Scheibe aufextrudiert wird und ohne Klebung zur Karosserie hin mit den bereits genannten Nachteilen, konventionell in die Karosserie eingebracht werden. Diesbezügliche Lösungsansätze mit Thermoplastischen Elastomeren (TPE) auf der Basis von Olefinen, Styrolen und Urethan blieben bisher zufolge schlechter Abdichteingenschaften unbefriedigend.

Ein erfindungsgemäß gebildetes Scheibenmodul stellt somit ein komplettes Einglasungssystem dar und kann als eigenständiges Konstruktionsmodul für die Fahrzeugmontage angesehen werden.

Durch die erfindungsgemäße Wahl des Wekstoffes für das gummi-elastische Konstruktionselement oder das Dichtungsprofil in Verbindung mit der verfahrenstechnischen Bildung des Scheibenmoduls entstehen folgende besonders hervorzuhebende Vorteile des Einglasungsverfahrens **Conventional-Direct-Glazing:**
- beim Fahrzeughersteller keine Investition notwendig,
- Vormontage entfällt,
- Abdichtung und Fixierung der Scheibe nicht mehr auf Scheibenkante begrenzt,
- stilistisch hoher Freiheitsgrad, z. B. dadurch, dass eckige Scheiben möglich,
- größere Scheiben als Karossenöffnung möglich,
- leichtes Recycling,
- Ein- und Ausbau der Scheibe problemlos möglich, d. h. kostengünstige Nachlackierung im Scheibenbereich und niedrigere Versicherungseinstufung,
- keine Undichtigkeit zwischen der Scheibe und dem gummi-elastischen Dichtungsprofil bzw. dem Konstruktionselement aufgrund des Systems und keine Undichtigkeit zwischen Karosse und gummi-elastischem Dichtungsprofil bzw. Konstruktionselement durch den gewählten Werkstoff.

Die Eintwicklung haftungssicherer, rationell montierbarer Einglasungen führt zum Einsatz von Scheibenmoduli als Konstruktionsmoduli. Darunter verteht man bereits beim Scheibenhersteller montagefreundlich vorbereitete Scheiben, die auch den immer engeren Räumlichkeiten am Montageband, der Abkehr von chemischen Prozessen beim Fahrzeughersteller aus Gründen der Arbeitshygiene und Physiologie und der Sicherung des steigen Montageablaufes Rechnung tragen.

Das erfindungsgemäße Verfahren des Conventional-Direct-Glazing, das der konventionellen Gummi-Einglasungstechnik nachvollzogen wurde, jedoch die Vorteile der modernen Einglasungstechniken beinhaltet, d. h. insbesondere es können vormontierte Scheibenmoduli als Konstruktionsmoduli beim Fahrzeughersteller angeliefert werden, erfordert keine Chemiekalien mehr am Montageband und hat zudem die stilistischen Möglichkeiten erweitert. Mit der der Gummi-Einglasung vergleichbaren Abdichtungsqualität erfüllt es auch progressive Erwartungen bei der montagegerechten Einglastechnik.

Das Verfahren besitzt in Verbindung mit der ebenfalls erfindungsgemäßen Vorrichtung des Schweißbandes als fügendes Zwischenband zu dem Anwendungsmöglichkeiten sowohl bei Scheiben aus anorganischen Gläsern wie einfachen Borat- und Phosphatgläsern über Alumosilicatgläser bis zu solchen komplizierter Zusammensetzung als auch bei organischen Gläsern wie z. B.: Polycarbonat-Gläsern (PC-Gläsern), Polystyrol-Gläsern (PS-Gläsern) oder auch solchen aus der Phthalat-Familie (PET-Gläster).

Selbst bei geometrisch komplizierter Scheibenform, wie z. B. der Oberflächenbereich eines Scheinwerfers - der einen umschlossenen Körper darstellt - kann das erfindungsgemäße Verfahren durch seine Variablilität erfolgreich angewandt werden.

## Patentansprüche

1. Verfahren zum dauerhaft festen und dichten Verbinden eines gummi-elastischen Konstruktionselementes in Form eines strangförmigen Verankerungsund/oder Dichtungsprofils mit einer feststehenden, transparenten bis durchscheinenden Scheibe zu einem Scheibenmodul für den Einbau in einem Fahrzeug, wobei das Dichtungselement einen mit der Scheibe durch Schweißen verbindbaren Teilbereich aufweisend ausgeführt wird,
**dadurch gekennzeichnet,**
**dass** Scheiben aus anorganischem oder organischem Glas oder aus einem Verbundglas eingesetzt werden, auf die das Konstruktionselement und innerhalb des Auflagebereiches des Dichtungsprofils der Teilbereich in Form eines als fügendes Zwischenband ausgeführten Schweißbandes eingelegt und vor der Montage des Scheibenmoduls am Fahrzeug thermisch aktiviert wird.

2. Verfahren nach Anspruch 1,
**dadurch gekennzeichnet,**
**dass** die Wärme zur thermischen Aktivierung des Schweißbandes teilweise oder vollständig aus der der Scheibe aus deren Herstellung verbliebenen Restwärme aufgewandt wird.

3. Verfahren nach Anspruch 1,
**dadurch gekennzeichnet,**
**dass** die Wärme zur thermischen Aktivierung des Schweißbandes mittelbar durch elektromagnetische Schwingungen eingebracht wird.

4. Verfahren nach Anspruch 1,
**dadurch gekennzeichnet,**
**dass** die Wärme zur thermischen Aktivierung des Schweißbandes unmittelbar als fühlbare Wärme mittels Heißluft oder über Heizplatten oder Heizdrähte eingebracht wird.

5. Scheibenmodul für den sitzfesten Einbau einer feststehenden Scheibe in ein Fahrzeug, wobei die Scheibe dauerhaft fest und dicht mit einem gummi-elastischen Konstruktionselement in Form eines strangförmigen Verankerungs- und/oder Dichtungsprofils mit schweißbarem Teilbereich zu einem einbaufertigen Scheibenmodul gefügt ist,
**dadurch gekennzeichnet,**
**dass** die Scheibe aus anorganischem oder organischem Glas oder Verbundglas besteht und der Teilbereich des Dichtungsprofils als zwischen Scheibe und Dichtungsprofil einzulegendes und anschließend thermisch aktivierbares Schweißband ausgebildet ist.

## Claims

1. Method for durably firm and tight connection of a rubbery elastic constructional element in the form of a strand-like anchoring and/or sealing profile to a fixed transparent to translucent sheet to form a sheet module for installation in a vehicle, the sealing element being designed with a portion which can be connected to the sheet by welding, **characterised in that** sheets of inorganic or organic glass or of a laminated glass are used on which the constructional element and the portion in the form of a welding strip designed as a joining intermediate strip within the contact region of the sealing profile is placed and thermally activated prior to assembly of the sheet module on the vehicle.

2. Method according to claim 1, **characterised in that** the heat for thermal activation of the welding strip is applied partially or completely from the residual heat remaining on the sheet from the production thereof.

3. Method according to claim 1, **characterised in that** the heat for thermal activation of the welding strip is introduced indirectly by electromagnetic vibrations.

4. Method according to claim 1, **characterised in that** the heat for thermal activation of the welding strip is introduced directly as tangible heat by means of hot air or via heating plates or heating wires.

5. Sheet module for secure installation of a fixed sheet in a vehicle, the sheet being joined in a durably firm and tight manner to a rubbery elastic constructional element in the form of a strand-like anchoring and/or sealing profile with a weldable portion to form a ready-to-assemble sheet module, **characterised in that** the sheet consists of inorganic or organic glass or laminated glass and the portion of the sealing profile is designed as a welding strip to be inserted between sheet and sealing profile which can then be thermally activated.

## Revendications

1. Procédé pour le raccordement fixe permanent et étanche d'un élément de construction élastique comme le caoutchouc sous la forme d'un profilé d'ancrage et/ou d'étanchéité en forme de boudin avec une vitre fixe transparente à translucide pour former un module de vitre à incorporer à un véhicule, l'élément d'étanchéité étant réalisé de manière à présenter une zone partielle raccordable à la vitre par soudage, **caractérisé en ce que** l'on utilise des vitres en verre inorganique ou organique ou encore en verre composite, sur lesquelles l'élément de construction et, dans la zone d'application du profilé d'étanchéité, la zone partielle sont insérés sous la forme d'un bande de soudage se présentant comme une bande intermédiaire de joint et sont activés à thermiquement avant montage du module de vitre sur le véhicule.

2. Procédé selon la revendication 1, **caractérisé en ce que** la chaleur destinée à l'activation thermique de la bande de soudage est tirée en partie ou en totalité de la chaleur résiduelle restant de la vitre lors de sa fabrication.

3. Procédé selon la revendication 1, **caractérisé en ce que** la chaleur destinée à l'activation thermique de la bande de soudage est indirectement appliquée par des oscillations électromagnétiques.

4. Procédé selon la revendication 1, **caractérisé en ce que** la chaleur destinée à l'activation thermique de la bande de soudage est appliquée directement comme chaleur sensible au moyen d'air chaud ou de plaques chauffantes ou de fils chauffants.

5. Module de vitre pour l'incorporation fixe d'un vitre fixe à un véhicule, dans lequel la vitre est jointe de manière fixe, permanente et étanche par un élément de construction élastique comme le caoutchouc sous la forme d'un profilé d'ancrage et/ou d'étanchéité avec une zone partielle soudable pour former un module de vitre prêt à être encastré, **caractérisé en ce que** la vitre est constituée de verre inorganique ou organique ou encore de verre composite et la zone partielle du profilé d'étanchéité se présente sous la forme d'une bande de soudage qui peut être insérée entre la vitre et le profilé d'étanchéité et peut ensuite être activée thermiquement.
